# EUROPÄISCHE PATENTSCHRIFT

(11) **EP 2 332 866 B1**
(45) Veröffentlichungstag und Bekanntmachung des Hinweises auf die Patenterteilung: **22.08.2012**
(21) Anmeldenummer: 10401176.2
(22) Anmeldetag: 15.10.2010
(51) Int. Cl.: B65G 47/76, B07C 5/12, G07F 7/06

(54) **Vorrichtung zum Sortieren von Gebinden**
Container sorting device
Dispositif destiné à trier des gerbes

(30) Priorität: 11.12.2009 DE 102009044870
(43) Veröffentlichungstag der Anmeldung: 15.06.2011
(73) Patentinhaber: Wincor Nixdorf International GmbH, 33106 Paderborn (DE)
(72) Erfinder: Hartung, Domenic, 99192 Molsdorf (DE)

(56) Entgegenhaltungen:
- US-A- 4 441 604
- US-A- 4 643 291

## Beschreibung

Die Erfindung betrifft eine Vorrichtung zum Sortieren von Gebinden mit einem Sortiermodul, das zwischen einer das Gebinde zuführenden Zuführbahn und einer Mehrzahl von Abfuhrbahnen angeordnet und mittels einer Antriebseinheit antreibbar ist, wobei das Sortiermodul ein Stellelement mit wenigstens einer Leitfläche aufweist zur Führung des Gebindes in Richtung einer vorgegebenen Abfuhrbahn, wobei das Stellelement senkrecht zu einer die Zuführbahn und die Abfuhrbahnen aufnehmenden Sortierebene um eine Schwenkachse drehbar angeordnet ist und wobei eine zwischen der Antriebseinheit und dem Stellelement angeordnete Übertragungseinheit zur Übertragung einer Antriebsbewegung der Antriebseinheit auf das Stellelement derart auf das Stellelement einwirkt, dass die Schwenkachse des Stellelements unter Verdrehung derselben um die Schwenkachse entlang einer vorgegebenen Führungsbahn geführt ist zur Verbringung des Stellelements von einer ersten Sortierstellung, in der die Zuführbahn mit einer ersten Abfuhrbahn verbunden ist, in eine zweite Sortierstellung, in der die Zuführbahn mit einer zweiten Abfuhrbahn verbunden ist.

Aus der DE 100 55 207 A1 ist eine Sortiervorrichtung für einen Leergutrücknahmeautomaten mit einem rohrförmigen Sortiermodul bekannt, in das zu sortierende Behälter auf einem Förderband liegend eingebracht werden. Das rohrförmige Sortiermodul ist um eine senkrecht zum Transportband vorgesehene Achse drehbar gelagert. Mithilfe des rohrförmigen Sortiermoduls kann der Behälter einer von drei vorgesehenen Abfuhrbahnen zugeführt werden, die in Bezug auf das Behälter zuführende Förderband eine Winkellage von 90°, 180° und 270° aufweisen. Nachteilig hierbei ist, dass die Behälter in maximal drei Fraktionen aufgeteilt werden können. Die Aufteilung in vier oder mehr Fraktionen macht eine Reihenschaltung einer Mehrzahl von Sortiervorrichtungen erforderlich, woraus Nachteile in Bezug auf Bauraum und Kosten erwachsen. Ferner ist der Sortiervorgang sehr zeitaufwendig, da das seitliche Abtransportieren eines Behälters ein zweimaliges Drehen der Sortiereinheit erforderlich macht. Der Durchsatz ist damit stark limitiert und wertvolle Zeit im Rücknahmeprozess geht verloren.

Ferner ist aus der DE 10 2009 011 716 A1 (nicht Teil des Stands der Technik gemäß Artikel 54(2)EPÜ) eine Vorrichtung zum Sortieren von Gebinden bekannt, bei der zwei rotatorische Stellelemente mittels eines Zentralantriebs derart verschwenkt werden, dass ein auf einer Zuführbahn zugeführtes Gebinde einer von bis zu fünf Abfuhrbahnen zuführbar ist.

Aus der US 4 643 291 A1 ist eine Vorrichtung gemäß dem Oberbegriff des Anspruchs 1 bekannt.

Aufgabe der vorliegenden Erfindung ist es, eine Sortiervorrichtung derart weiterzubilden, dass mehrere Gebinde auf engem Raum innerhalb kurzer Zeit in eine Mehrzahl von Fraktionen verteilt werden können. Hierbei ist insbesondere auf eine hohe Sortiergenauigkeit bzw. auf eine geringe Fehlsortierquote abzustellen.

Zur Lösung dieser Aufgabe ist die Erfindung in Verbindung mit dem Oberbegriff des Patentanspruchs 1 dadurch gekennzeichnet, dass dem entlang der Führungsbahn geführten Stellelement ein ortsfest angeordneter, um eine Drehachse schwenkbarer Stellflügel mit wenigstens einer zusätzlichen Leitfläche zugeordnet ist.

Der besondere Vorteil der Erfindung besteht darin, dass die Sortiergenauigkeit durch das Vorsehen eines verschwenkbaren Stellflügels verbessert wird. Der Stellflügel kann zum einen über eine oder mehrere nicht ausgewählte Abfuhrbahnen geschwenkt werden und diese für ein Gebinde sperren. Hierdurch wird zuverlässig verhindert, dass das Gebinde versehentlich einer nicht ausgewählten Abfuhrbahn zugeführt wird. Zum anderen kann das Gebinde durch eine von dem Stellflügel bereitgestellte zusätzliche Leitfläche in Richtung der ausgewählten Abfuhrbahn geleitet werden. Die zusätzliche Leitfläche verlängert beispielsweise eine von dem Stellelement bereitgestellte Leitfläche und erhöht so die Sortiergenauigkeit.

Nach einer bevorzugten Ausführungsform der Erfindung ist die Führungsbahn in einer Verstellrichtung des Sortiermoduls linear ausgebildet. Innerhalb des durch die Anzahl, Größe und Anordnung der Abfuhrbahnen definierten Sortierraums vergrößert sich durch die lineare Führungsbahn der Bereich, in dem das Stellelement verschwenkt und positioniert werden kann. Hierdurch ist eine besonders exakte Ausrichtung der Leitflächen des Stellelements in Bezug auf die ausgewählte Abfuhrbahn realisiert.

Nach einer Weiterbildung der Erfindung weist die Übertragungseinheit ein linear in die Verteilungsrichtung erstrecktes, ortsfestes Führungsmittel und ein koaxial zu der Schwenkachse des Stellelements angeordnetes, mit dem Stellelement in Wirkverbindung stehendes rotatorisches Führungsmittel auf. Durch das Zusammenwirken des ortsfesten Führungsmittels mit dem rotierenden Führungsmittel ist das Stellelement bei Rotation desselben um die Schwenkachse entlang der Führungsbahn linear bewegbar geführt. Vorteilhaft wird auf diese Weise eine kinematische Kopplung der Linearbewegung und einer rotatorischen Schwenkbewegung des Stellelements bewirkt. Für die Linearverstellung und die rotatorische Verstellung kann hierbei ein gemeinsamer Antrieb zur Anwendung kommen. Durch den gemeinsamen Antrieb reduziert sich der Aufwand zur Steuerung der Antriebseinheit sowie zur Erfassung der Position des Stellelements beispielsweise mittels Sensoren. Als Antriebseinheit kann beispielsweise ein Schrittmotor eingesetzt werden. Beispielsweise ist es möglich, einen rotatorisch wirkenden Elektromotor bzw. einen Linearmotor vorzusehen. Zur Bildung der Antriebseinheit kann der Motor mit einem Getriebe oder mit einem anderen Wandler zusammenwirken.

Nach einer Weiterbildung der Erfindung weist das Sortiermodul eine in der Verstellrichtung verschiebbar angeordnete Steuerkontur auf zur Betätigung des Stellflügels. Vorteilhaft wird durch die Steuerkontur der Stellflügel in Abhängigkeit von der Position des Stellelements betätigt. Auf diese Weise kann der Stellflügel unter Verzicht auf eigene Antriebskomponenten von einer ersten Schwenkstellung in wenigstens eine zweite Schwenkstellung verbracht werden.

Die Bewegung des Stellflügels ist hierbei über die Steuerkontur an die Bewegung des Stellelements gekoppelt. Der Stellflügel kann beispielsweise über Federelemente in einer Vorzugsstellung positioniert sein. Sobald die Steuerkontur in Eingriff kommt, wird der Stellflügel aus der Vorzugsstellung in eine andere Verschwenkposition verschwenkt.

Nach einer Weiterbildung der Erfindung sind zwei Stellelemente angeordnet, die um eine gemeinsame Schwenkachse, jedoch in entgegengesetzte Drehrichtungen drehbar gelagert sind. Vorteilhaft ergeben sich durch das Vorsehen zweier Stellelemente zusätzliche Sortieroptionen, so dass die Sortiergenauigkeit des Sortiermoduls weiter verbessert wird. Die zwei Stellelemente können hierbei von einer gemeinsamen Antriebseinheit und insbesondere von einem gemeinsamen Motor betätigt werden. Beispielsweise kann für jedes der zweite Stellelemente eine separate Übertragungseinheit angeordnet sein. Hierdurch wird es in einfacher Weise möglich, zusätzlich zu der entgegengesetzten Drehrichtung für beide Stellelemente eine unterschiedliche Rotationsgeschwindigkeit zu realisieren.

Nach einer Weiterbildung der Erfindung weist das Sortiermodul zwei Stellflügel auf. Das wenigstens eine Stellelement ist in Verstellrichtung zwischen den beiden Stellflügeln angeordnet. Vorteilhaft erhöht sich die Sortiergenauigkeit und die Anzahl der möglichen Sortierwege durch das Vorsehen von zwei Stellflügeln. Die Stellflügel können gemeinsam oder jeder für sich betätigt werden. Bei einer gemeinsamen Betätigung kann die Bewegung der Stellflügel beispielsweise über ein Koppelelement aufeinander abgestimmt sein. Bei einer individuellen Betätigung sind die Stellflügel untereinander ungekoppelt. Sie können beispielsweise über zwei getrennt ausgebildete Steuerkonturen angesteuert werden, so dass auch bei Vorsehen von zwei Stellflügeln auf zusätzliche Antriebskomponenten verzichtet werden kann.

Weitere Vorteile der Erfindung ergeben sich aus den weiteren Unteransprüchen.

Ausführungsbeispiele der Erfindung werden nachfolgend anhand der Figuren näher erläutert.

Es zeigen:
- Figur 1: eine Vorrichtung zum Sortieren von Gebinden in einer ersten Sortierstellung,
- Figur 2: die Vorrichtung zum Sortieren von Gebinden in einer zweiten Sortierstellung,
- Figur 3: die Vorrichtung zum Sortieren von Gebinden in einer dritten Sortierstellung,
- Figur 4: die Vorrichtung zum Sortieren von Gebinden in einer vierten Sortierstellung,
- Figur 5: die Vorrichtung zum Sortieren von Gebinden in einer fünften Sortierstellung,
- Figur 6: die Vorrichtung zum Sortieren von Gebinden in einer sechsten Sortierstellung,
- Figur 7: die Vorrichtung zum Sortieren von Gebinden in einer siebten Sortierstellung und
- Figur 8: die Vorrichtung zum Sortieren von Gebinden in einer achten Sortierstellung.

Eine Vorrichtung 1 zum Sortieren von Gebinden wird beispielsweise zusammen mit einem Leergutrücknahmeautomaten im Einzelhandel eingesetzt, um zurückgegebene Einweg- oder Mehrwegpfandflaschen, Getränkedosen oder Getränkekisten nach der Erfassung derselben automatisiert in eine Mehrzahl von Fraktionen zu unterteilen. Hierbei werden beispielsweise Einwegpfandflaschen aus Kunststoff, Mehrwegflaschen aus Kunststoff, Mehrwegglasflaschen und Getränkekisten getrennt und unterschiedlichen Lagerorten bzw. Bevorratungsbehältnissen zugeführt. Beispielsweise können Einwegpfandflaschen aus Kunststoff nach dem Sortieren in einem Kompaktierer zerkleinert, insbesondere geschräddert oder zusammengedrückt und anschließend platzsparend bevorratet werden.

Die Vorrichtung 1 weist als zentrale Baugruppen ein Sortiermodul 2, eine Zuführbahn 3, eine Anzahl an Abfuhrbahnen 4, 5, 6, 7, 8 sowie ein Trägermodul 9 auf, an dem die Baugruppen befestigt sind und das beispielsweise der Aufnahme nicht dargestellter Funktionseinheiten, insbesondere einer Steuereinheit zur Steuerung der Vorrichtung 1, dient. Die Zuführbahn 3 und die Abfuhrbahnen 4, 5, 6, 7, 8 sind in einer gemeinsamen Sortierebene S angeordnet. Das Sortiermodul 2 umfasst eine Antriebseinheit 10, ein erstes Stellelement 11, ein zweites Stellelement 12 sowie eine Übertragungseinheit 13 zur Übertragung einer Antriebsbewegung der Antriebseinheit 10 auf das erste Stellelement 11 und das zweite Stellelement 12. Ferner weist das Sortiermodul 2 einen ersten Stellflügel 14 und einen zweiten Stellflügel 15 auf. Die Stellflügel 14, 15 können mittels der Antriebseinheit 10 betätigt werden.

Die Stellelemente 11, 12 sind um eine gemeinsame, senkrecht zu der Sortierebene S orientierte Schwenkachse D1 drehbar angeordnet. Das erste Stellelement 11 weist in der zu der Schwenkachse D1 senkrecht orientierten Sortierebene S eine im Wesentlichen dreieckförmige Kontur auf. Die drei Seiten bilden drei Leitflächen 16, 17, 18 des ersten Stellelements 11. Eine erste Leitfläche 16 und eine zweite Leitfläche 17 sind im Wesentlichen eben ausgebildet und rechtwinklig zueinander orientiert angeordnet. Eine die erste Leitfläche 16 und die zweite Leitfläche 17 verbindende dritte Leitfläche 18 ist im Wesentlichen konkav gekrümmt ausgebildet. Die erste Leitfläche 16 schließt mit der dritten Leitfläche 18 einen ersten spitzen Eckbereich 19 und die zweite Leitfläche 17 mit der dritten Leitfläche 18 einen zweiten spitzen Eckbereich 20 des ersten Stellelements 11 ein. Die Schwenkachse D1 ist im Bereich des rechten Winkels zwischen der ersten Leitfläche 16 und der zweiten Leitfläche 17 angeordnet. Das erste Stellelement 11 ist in der Sortierebene S symmetrisch bezüglich einer den rechten Winkel zwischen der ersten Leitfläche 16 und der zweiten Leitfläche 17 teilenden Winkelhalbierenden ausgebildet. Das zweite Stellelement 12 ist langgestreckt ausgebildet und weist in der Sortierebene S ein flügelähnliches Profil auf. Zwei gegenüberliegende Längsseiten des zweiten Stellelements 12 bilden eine erste Leitfläche 21 und eine zweite Leitfläche 22 des zweiten Stellelements 12. Die Schwenkachse D1 ist im Bereich einer ersten, die erste Leitfläche 21 mit der zweiten Leitfläche 22 verbindenden Stirnseite des zweiten Stellelements 12 angeordnet. Die der Schwenkachse D1 gegenüberliegende Stirnseite 23 des zweiten Stellelements 12 ist durch die konvex geformten Leitflächen 21, 22 des zweiten Stellelements 12 gebildet und spitz ausgeformt.

Das erste Stellelement 11 und das zweite Stellelement 12 werden von der Antriebseinheit 10 angetrieben. Die Antriebseinheit 10 weist einen Elektromotor 24 und ein Winkelgetriebe 25 auf. Eine Antriebswelle des Elektromotors 24 ist senkrecht zu der Schwenkachse D1 der Stellelemente 11, 12 angeordnet. Das Winkelgetriebe 25 dient dazu, die Antriebsbewegung des Elektromotors 24 hinsichtlich der Parameter Drehzahl und Drehmoment anzupassen. Ferner überwindet das Winkelgetriebe 25 den 90°-Winkelversatz zwischen der Antriebswelle des Elektromotors 24 und der Schwenkachse D1 der Stellelemente 11, 12.

Die Antriebseinheit 10 ist an einem Schlitten 26 befestigt. Der Schlitten 26 ist in zwei in eine Verstellrichtung V des Sortiermoduls 2 erstreckten Linearführungen 27 linear verschiebbar geführt. Die Verstellrichtung V des Sortiermoduls 2 erstreckt sich hierbei in der Sortierebene S des Sortiermoduls 2. Die Linearführungen 27 sind an einem Brückenträger 28 gehalten, der drei Abfuhrbahnen 6, 7, 8 beabstandet überspannt. Zwischen dem Brückenträger 28 und den drei von ihm überspannten Abfuhrbahnen 6, 7, 8 sind die Stellelemente 11, 12 angeordnet.

Die Übertragungseinheit 13 ist zwischen dem Winkelgetriebe 25 der Antriebseinheit 10 und den Stellelementen 11, 12 angeordnet. Die Übertragungseinheit 13 weist eine Zahnstange 30 als ein erstes, linear in der Verstellrichtung V erstrecktes ortsfestes Führungsmittel und ein mit der Zahnstange 30 in Wirkverbindung stehendes Zahnrad als ein erstes rotierendes Führungsmittel auf. Die Zahnstange 30 ist fest an dem Brückenträger 28 angeordnet und definierte eine Führungsbahn 29, entlang der die Stellelemente 11, 12 linear beweglich angeordnet sind. Das erste rotierende Führungsmittel ist drehfest mit dem ersten Stellelement 11 verbunden. Ferner ist ein ebenfalls an dem Brückenträger 28 gehaltenes, nicht dargestelltes zweites ortsfestes Führungsmittel und ein drehfest mit dem zweiten Stellelement 12 verbundenes zweites rotierendes Führungsmittel angeordnet. Das zweite ortsfeste Führungsmittel ist ebenfalls als Zahnstange und das zweite rotierende Führungsmittel als Zahnrad ausgebildet. Das zweite ortsfeste Führungsmittel und das zweite rotierende Führungsmittel stehen miteinander in Eingriff.

Eine Antriebsbewegung des Elektromotors 24 wird über das Winkelgetriebe 25 auf die Stellelemente 11, 12 übertragen. Da die Stellelemente 11, 12 über die rotierenden Führungsmittel drehfest mit einer Abtriebswelle des Winkelgetriebes 25 verbunden sind, werden die Stellelemente 11, 12 um die gemeinsame Schwenkachse D1 gedreht. Aufgrund der Wirkverbindung zwischen den rotierenden Führungsmitteln und den ortsfesten Führungsmitteln (Zahnstange 30) ist der Rotationsbewegung eine Translationsbewegung in der Verstellrichtung V des Sortiermoduls 2 überlagert. Bei dieser Translation werden die Stellelemente 11, 12 zusammen mit dem Schlitten 26 und der hieran befestigten Antriebseinheit 10 linear entlang der durch die Zahnstange 30 vorgegebenen Führungsbahn 29 verschoben. Die Übertragungseinheit 13 ist hierbei derart ausgelegt, dass die Drehbewegungen der Stellelemente 11, 12 um die Schwenkachse D1 in zwei entgegengesetzte Drehrichtungen und mit einer unterschiedlichen Drehgeschwindigkeit ausgeführt werden.

Die Stellflügel 14, 15 sind um zwei parallele Drehachsen D2, D3 drehbar an dem Trägermodul 9 und/oder an dem Brückträger 28 gelagert. Die Drehachsen D2, D3 sind senkrecht zur Sortierebene S des Sortiermoduls 2 und parallel zur Schwenkachse D1 der Stellelemente 11, 12 orientiert. Die Stellflügel 14, 15 sind in der Sortierebene S im Wesentlichen dreieckförmig ausgebildet. Zwei der drei Dreieckseiten dienen hierbei als Leitflächen 31, 32, 33, 34 der Stellflügel 14, 15. Eine erste Leitfläche 31 des ersten Stellflügels 14 und eine erste Leitfläche 33 des zweiten Stellflügels 15 sind im Wesentlichen eben ausgebildet. Eine zweite Leitfläche 32 des ersten Stellflügels 14 und eine zweite Leitfläche 34 des zweiten Stellflügels 15 sind konkav gekrümmt. Die erste Leitfläche 31 und die zweite Leitfläche 32 des ersten Stellflügels 14 formen einen spitzen Eckbereich 35 des ersten Stellflügels 14 und die erste Leitfläche 33 und die zweite Leitfläche 34 des zweiten Stellflügels 15 einen spitzen Eckbereich 36 des zweiten Stellflügels 15. Die Drehachsen D2, D3 der Stellflügels 14, 15 sind an einem dem spitzen Eckbereich 35, 36 abgewandten Ende der eben ausgebildeten ersten Leitfläche 31, 33 der Stellflügel 14, 15 angeordnet. Bezüglich einer senkrecht zu der Sortierebene S orientierten und mittig zu der Zuführbahn 3 verlaufenden Mittelebene M des Sortiermoduls 2 sind die Stellflügel 14, 15 symmetrisch angeordnet.

Durch Verschwenken der Stellflügel 14, 15 können die Stellflügel 14, 15 in eine von drei Schwenkstellungen verbracht werden. In einer ersten Schwenkstellung ist der erste Stellflügel 14 mit dem spitzen Eckbereich 35 desselben über eine erste Abfuhrbahn 4 geschwenkt. Der zweite Stellflügel 15 ist mit dem spitzen Eckbereich 36 desselben über eine zweite Abfuhrbahn 5 geschwenkt. In einer zweiten Schwenkstellung der Stellflügel 14, 15 sind die ersten Leitflächen 31, 33 derselben seitlich benachbart zu der ersten Abfuhrbahn 4 bzw. zu der zweiten Abfuhrbahn 5 und parallel zu derselben orientiert angeordnet. Die spitzen Eckbereiche 35, 36 der Stellflügel 14, 15 weisen hierbei einen minimalen Abstand zueinander auf und sind einander zugewandt. In einer dritten Schwenkstellung ist der spitze Eckbereich 35 des erstens Stellflügels 14 in Richtung einer dritten Abfuhrbahn 6 und der spitze Eckbereich 36 des zweiten Stellflügels 15 in Richtung einer vierten Abfuhrbahn 7 verschwenkt angeordnet. Die dritte Abfuhrbahn 6 und die vierte Abfuhrbahn 7 sind parallel auf unterschiedlichen Seiten der Mittelebene M und symmetrisch zu derselben angeordnet.

Zum Verschwenken der Stellflügel 14, 15 wird eine erste Steuerkulisse 37 des Schlittens 26 mit einem Mitnehmernocken 38 des ersten Stellflügels 14 oder eine zweite Steuerkulisse 39 mit einem Mitnehmernocken 40 des zweiten Stellflügels 15 in Eingriff gebracht. Die Mitnehmernocken 38, 40 ragen beabstandet zu den Drehachsen D2, D3 der Stellflügel 14, 15 von denselben ab. Die Schwenkbewegungen der Stellflügel 14, 15 sind untereinander gekoppelt, so dass die Stellflügel 14, 15 stets gemeinsam in der ersten Schwenkstellung oder in der zweiten Schwenkstellung oder in der dritten Schwenkstellung angeordnet sind. Durch ein nicht dargestelltes Federelement wird bewirkt, dass die Stellflügel 14, 15 in der ersten Schwenkstellung verschwenkt angeordnet sind, sofern weder die erste Steuerkulisse 37 noch die zweite Steuerkulisse 39 mit den Mitnehmernocken 38, 40 in Eingriff stehen.

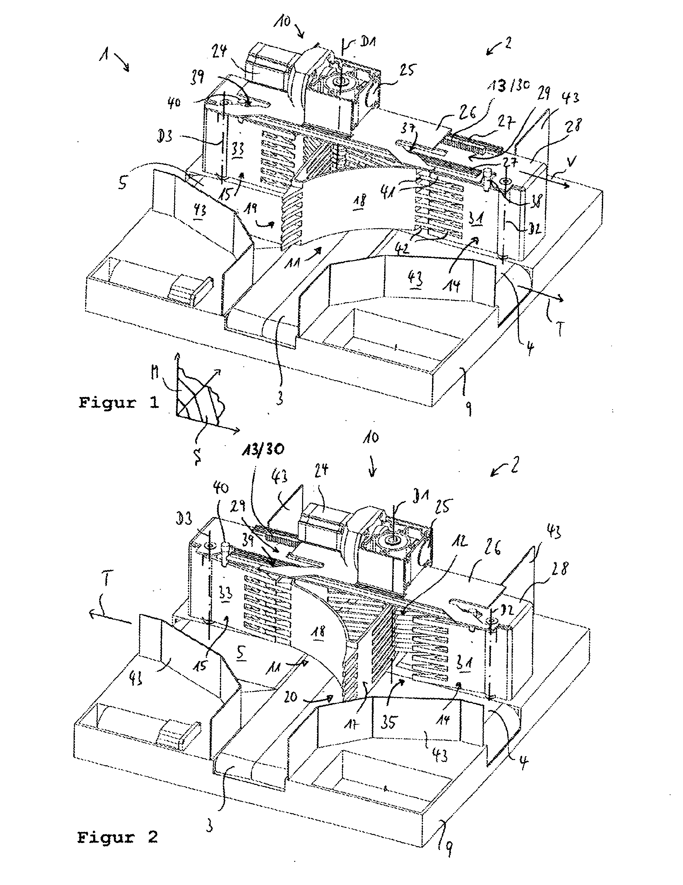

In einer ersten Sortierstellung des Sortiermoduls 2 gemäß Figur 1 ist das erste Stellelement 11 mit der dritten Leitfläche 18 desselben über die Zuführbahn 3 geschwenkt angeordnet. Der erste Stellflügel 14 befindet sich in der zweiten Schwenkstellung. Der zweite spitze Eckbereich 20 des ersten Stellelements 11 zeigt in Richtung der Drehachse D2 des ersten Stellflügels 14 und der Eckbereich 35 des ersten Stellflügels 14 in Richtung der Schwenkachse D1 des ersten Stellelements 11. Die dritte Leitfläche 18 des ersten Stellelements 11 und die in Transportrichtung T vor der dritten Leitfläche 18 als erstes Stellelement 11 angeordneten erste Leitfläche 31 des ersten Stellflügels 14 bilden eine gemeinsame Leitfläche, entlang derer einer auf der Zuführbahn 3 zugefördertes Gebinde in Richtung der in Bezug zur Zuführbahn 3 um 90° versetzt angeordneten ersten Abfuhrbahn 4 transportiert wird. Die in der Bewegung gekoppelten Stellflügel 14, 15 werden durch die mit dem Mitnehmernocken 40 des zweiten Stellflügels 15 zusammenwirkdende zweite Steuerkulisse 39 in der Schwenkstellung gehalten. Der zweite Stellflügel 15 und das zweite Stellelement 12, welches in Richtung der vierten Abfuhrbahn 7 zeigt, sind hierbei außer Eingriff.

Um eine möglichst umfassende und vollflächige Führung des Gebindes entlang der in Eingriff befindlichen Leitflächen 18, 31 zu erreichen und zugleich ein kollisionsfreies Verschwenken der Stellelemente 11, 12 und der Stellflügel 14, 15 sicherzustellen, sind die Leitflächen 16, 17, 18, 21, 22, 31, 32, 33, 34 zumindest teilweise durch parallel zu der Sortierebene S erstreckte und zueinander höhenversetzt angeordnete Zähne 41 und Ausnehmungen 42 gebildet. Beispielsweise greifen die in dem zweiten spitzen Eckbereich 20 angeordneten Zähne 41 des ersten Stellelements 11 in korrespondierende, das heißt höhenversetzt angeordnete Ausnehmungen 42 des ersten Stellflügels 14 und die im Eckbereich 35 des ersten Stellflügels 14 angeordneten Zähne 41 in höhenversetzt hierzu angeordnete Ausnehmungen 42 des ersten Stellelements 11 ein. Eine weitere Verbesserung der Führung der in Transportrichtung T geförderten Gebinde wird durch sich senkrecht zur Sortierebene S erstreckende passive Leiteinheiten 43 erreicht, die sicherstellen, dass ein in Transportrichtung T umzulenkendes Gebinde nicht zu einer von den Leitflächen 16, 17, 18, 21, 22, 31, 32, 33, 34 nicht gesicherten Seite von der Zuführbahn 3 oder in Abfuhrbahnen 4, 5, 6, 7, 8 geleitet.

In einer bezüglich der Mittelebene M spiegelverkehrt zu der ersten Sortierstellung gebildeten zweiten Sortierstellung des Sortiermoduls 2 gemäß Figur 2 wird ein auf der Zuführbahn 3 zugeführtes Gebinde entlang der über die Zuführbahn 3 geschwenkt angeordneten dritten Leitfläche 18 des ersten Stellelements 11 und der ersten Leitfläche 33 des zweiten Stellflügels 15 in Richtung der zweiten Abfuhrbahn 5 transportiert. Die in ihrer Bewegung gekoppelten Stellflügel 14, 15 werden hierbei durch die mit dem Mitnehmernocken 38 des ersten Stellflügels 14 zusammenwirkende erste Steuerkulisse 37 in der zweiten Schwenkstellung gehalten.

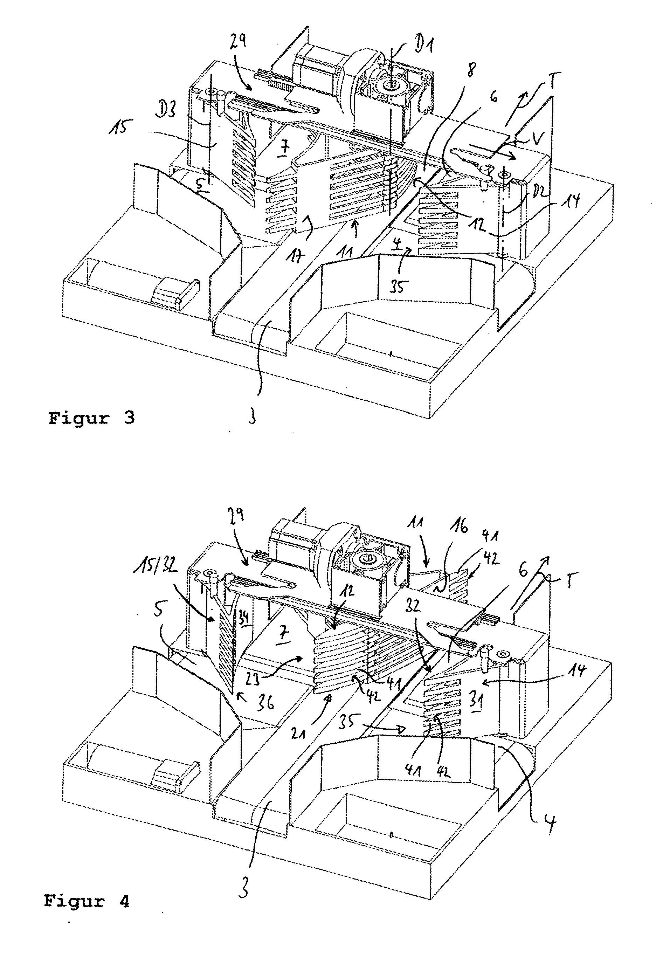

In einer dritten Sortierstellung des Sortiermoduls 2 gemäß Figur 3 ist die zweite Leitfläche 17 des ersten Stellelements 11 derart über die Zuführbahn 3 geschwenkt, dass ein auf der Zuführbahn 3 gefördertes Gebinde entlang der zweiten Leitfläche 17 in Richtung der dritten Abfuhrbahn 6 transportiert wird. Es wird hierbei zwischen der zweiten Leitfläche 17 des ersten Stellelements 11 und der zweiten Leitfläche 32 des ersten Stellflügels 14 und unter dem Brückenträger 28 hindurch gefördert. Der erste Stellflügel 14 ist mit dem spitzen Eckbereich 35 derart über die erste Abfuhrbahn 4 geschwenkt, dass die erste Abfuhrbahn 4 für das Gebinde gesperrt ist und eine Fehlsortierung des Gebindes in Richtung der ersten Abfuhrbahn 4 sicher vermieden werden kann.

In einer vierten Sortierstellung des Sortiermoduls 2 gemäß Figur 4 wird das auf der Zuführbahn 3 zugeführte Gebinde ebenfalls in Richtung der dritten Abfuhrbahn 6 gefördert. Die erste Leitfläche 21 des zweiten Stellelements 12 ist hierbei über die Zuführbahn 3 und die erste Leitfläche 16 des erstens Stellelements 11 über die zwischen der dritten Abfuhrbahn 6 und der vierten Abfuhrbahn 7 angeordnete fünfte Abfuhrbahn 8 geschwenkt, so dass das zugeführte Gebinde zunächst von der ersten Leitfläche 21 des zweiten Stellelements 12 und anschließend entlang der in Transportrichtung T vor der ersten Leitfläche 21 des zweiten Stellelements 12 angeordneten ersten Leitfläche 16 des ersten Stellelements 11 in Richtung der dritten Abfuhrbahn 6 geführt wird. Wie in der dritten Sortierstellung ist der spitze Eckbereich 35 des ersten Stellflügels 14 über die erste Abfuhrbahn 4 gesperrt und sperrt diese für das Gebinde. Beim Fördern des Gebindes von der Zuführbahn 3 auf die dritten Abfuhrbahn 6 wird das Gebinde zwischen der ersten Leitfläche 21 des zweiten Stellelements 12 und der ersten Leitfläche 16 des ersten Stellelements 11 einerseits und der zweiten Leitfläche 32 des ersten Stellflügels 14 andererseits hindurchgefördert.

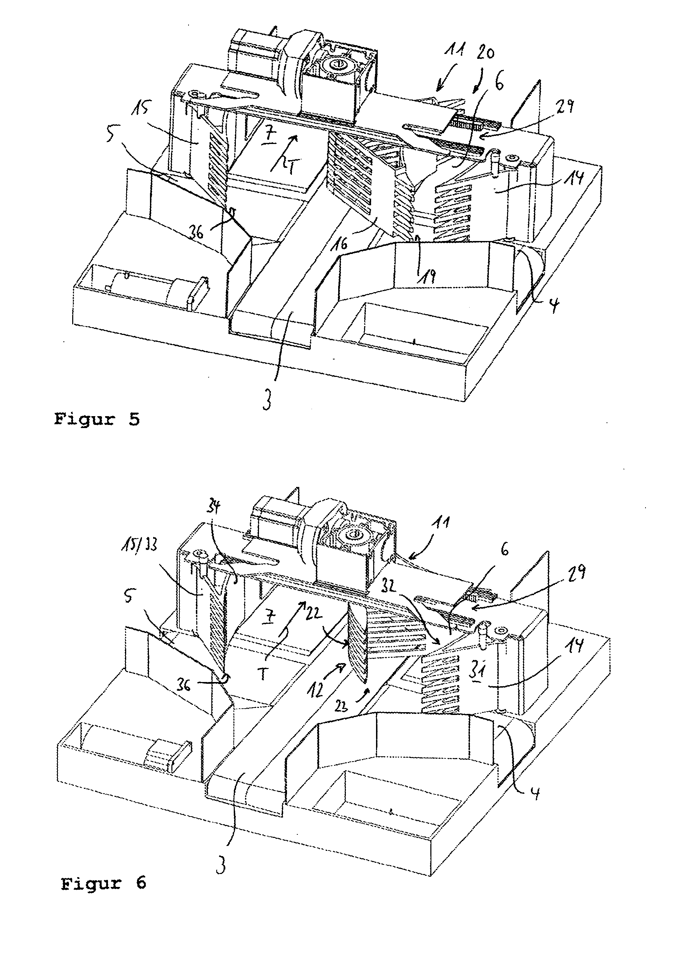

Eine fünfte Sortierstellung des Sortiermoduls 2 gemäß Figur 5 ist spiegelverkehrt bezüglich der Mittelebene M zu der dritten Sortierstellung des Sortiermoduls 2 gebildet. Ein auf der Zuführbahn 3 zugeführtes Gebinde wird hierbei entlang der über die Zuführbahn 3 geschwenkten Leitfläche 16 des ersten Stellelements 11 in Richtung der vierten Abfuhrbahn 7 geführt. Das Gebinde wird zwischen der ersten Leitfläche 16 des ersten Stellelements 11 und der zweiten Leitfläche 34 des zweiten Stellflügels 15 und unter dem Brückenträger 28 hindurch transportiert. Der zweite Stellflügel 15 wird mit dem spitzen Eckbereich 36 desselben derart über die zweite Abfuhrbahn 5 geschwenkt, dass diese für das Gebinde gesperrt ist.

Eine sechste Sortierstellung des Sortiermoduls 2 gemäß Figur 6 ist spiegelverkehrt bezüglich der Mittelebene M zu der vierten Sortierstellung aufgebaut. Ein auf der Zuführbahn 3 zugeführtes Gebinde wird hierbei entlang der zweiten Leitfläche 22 des zweiten Stellelements 12 und des in Transportrichtung T vor der zweiten Leitfläche 22 des zweiten Stellelements 12 angeordneten zweiten Leitfläche 17 des ersten Stellelements 11 in Richtung der vierten Abfuhrbahn 7 transportiert. Die zweite Leitfläche 22 des zweiten Stellelements 12 ist hierbei über die Zuführbahn 3 und die zweite Leitfläche 17 des ersten Stellelements 11 über die fünfte Abfuhrbahn 8 geschwenkt. Der spitze Eckbereich 26 des zweiten Stellflügels 15 ist derart über die zweite Abfuhrbahn 5 geschwenkt, dass diese für das Gebinde gesperrt ist.

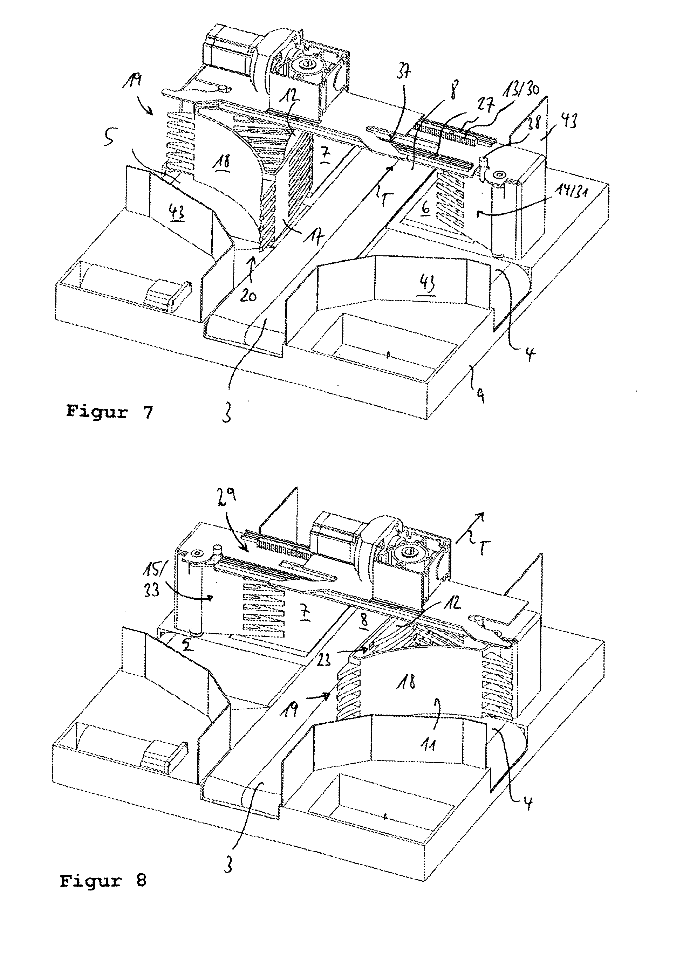

In einer siebten Sortierstellung des Sortiermoduls 2 gemäß Figur 7 wird das Gebinde der in Verlängerung der Zuführbahn 3 angeordneten fünften Abfuhrbahn 8 zugeführt. Eine Umlenkung des Gebindes an einer der Leitflächen 16, 17, 18, 21, 22, 31, 32, 33, 34 ist hierbei nicht erforderlich. Das erste Stellelement 11 und das zweite Stellelement 12 sind durch Linearverschiebung des Schlittens 26 entlang der Führungsbahn 29 in Richtung des zweiten Stellflügels 15 derart benachbart zu der Zuführbahn 3 und der fünften Abfuhrbahn 8 angeordnet, dass der zweite spitze Eckbereich 20 des ersten Stellelements 11 und die spitze Stirnseite 23 des zweiten Stellelements 12 in Richtung der Zuführbahn 3 zeigen. Das erste Stellelement 11 und das zweite Stellelement 12 sind hierbei ineinander gedreht angeordnet. Die Stellflügel 14, 15 sind in der dritten Schwenkposition verbracht. In der siebten Sortierstellung ist die erste Leitfläche 16 des ersten Stellelements 11 unmittelbar benachbart zu der ersten Leitfläche 33 des zweiten Stellflügels 15 positioniert. Der zweite Stellflügel 15 blockiert in der dritten Schwenkstellung die dritte Abfuhrbahn 6.

Eine achte Sortierstellung des Sortiermoduls 2 gemäß Figur 8 ist spiegelverkehrt bezüglich der Mittelebene M zu der siebten Sortierstellung aufgebaut. Das auf der Zuführbahn 3 zugeführte Gebinde wird ohne Umlenkung der fünften Abfuhrbahn 8 zugeführt. Das erste Stellelement 11 und das zweite Stellelement 12 sind auf der Seite des ersten Stellflügels 14 neben der Zuführbahn 3 und der fünften Abfuhrbahn 8 angeordnet. Der in der dritten Schwenkstellung positionierte zweite Stellflügel 15 sperrt in der dritten Schwenkstellung die vierte Abfuhrbahn 7.

Das Sortiermodul 2 ist aufgrund der acht unterschiedlichen Sortierpositionen und der Möglichkeit, das auf der Zuführbahn 3 zugeführte Gebinde einer von bis zu fünf Abfuhrbahnen 4, 5, 6, 7, 8 zuzuführen, äußerst flexibel einsetzbar. Da Gebinde in jeweils zwei Sortierstellungen der dritten, vierten und fünften Abfuhrbahn 6, 7, 8 zugeführt werden können, ist eine hohe Dynamik bei der Sortierung insbesondere im Hinblick auf diese Abfuhrbahnen 6, 7, 8 gegeben. Vorteilhaft können Gebinde, die häufig sortiert werden, über die dritte, vierte bzw. fünfte Abfuhrbahn 6, 7, 8 abgeführt werden. Gebinde, die seltener zurückgegeben werden, können über die erste Abfuhrbahn 4 bzw. die zweite Abfuhrbahn 5 zurückgegeben werden.

Nach einer alternativen Ausführungsform der Erfindung können weniger als fünf Abfuhrbahnen 4, 5, 6, 7, 8 vorgesehen sein. Die zu der nicht mehr vorgesehenen Abfuhrbahn korrespondierenden Sortierstellungen des Sortiermoduls 2 werden dann nicht angefahren. Beispielsweise kann die Anordnung der Abfuhrbahnen 4, 5, 6, 7, 8 von der beispielhaft dargestellten Anordnung abweichen. Die dritte Abfuhrbahn 6, die vierte Abfuhrbahn 7 und die fünfte Abfuhrbahn 8 müssen beispielsweise nicht parallel zueinander angeordnet sein. Beispielsweise kann auf die symmetrische Anordnung der dritten und vierten Abfuhrbahn 6, 7 und der ersten und zweiten Abfuhrbahn 4, 5 verzichtet werden. Die Zuführbahn 3 und die fünfte Abfuhrbahn 8 können nach einer alternativen Ausführungsform der Erfindung durch getrennte Transportbänder realisiert werden.

Gleiche Bauteile und Bauteilfunktionen sind durch gleiche Bezugszeichen gekennzeichnet.

Statt einer Anordnung der Antriebswelle des Elektromotors 24 in Verstellrichtung V des Schlittens 26 kann die Antriebswelle parallel bzw. koaxial zu der Schwenkachse D1 der Stellelemente 11, 12 angeordnet sein. Ebenso kann ein ortsfester Elektromotor 24 angeordnet sein. Die rotatorische Antriebsbewegung kann dann über einen geeigneten Wandler in eine translatorische Bewegung des Schlittens 26 in Verstellrichtung V übertragen werden. Darüber hinaus kann statt eines Elektromotors 24 mit rotatorischer Antriebsbewegung beispielsweise ein Linearmotor verwendet werden.

Nach einer alternativen Ausführungsform der Erfindung können die Stellelemente 11, 12 bzw. die Stellflügel 14, 15 durch mehr als einen Motor 24 betätigt werden. Beispielsweise kann ein erste Motor 24 die Stellelemente 11, 12 betätigen und ein zweiter Motor zum Verschwenken der Stellflügel 14, 15 vorgesehen sein. Auf eine mechanische Kopplung der Bewegung der Stellflügel 14, 15 kann verzichtet werden.

### Bezugszeichenliste

- 1: Vorrichtung
- 2: Sortiermodul
- 3: Zuführbahn
- 4: erste Abfuhrbahn
- 5: zweite Abfuhrbahn
- 6: dritte Abfuhrbahn
- 7: vierte Abfuhrbahn
- 8: fünfte Abfuhrbahn
- 9: Trägermodul
- 10: Antriebseinheit
- 11: Stellelement
- 12: Stellelement
- 13: Übertragungseinheit
- 14: Stellflügel
- 15: Stellflügel
- 16: Leitfläche
- 17: Leitfläche
- 18: Leitfläche
- 19: Eckbereich
- 20: Eckbereich
- 21: Leitfläche
- 22: Leitfläche
- 23: Stirnseite
- 24: Elektromotor
- 25: Winkelgetriebe

- 26: Schlitten
- 27: Linearführungen
- 28: Brückenträger
- 29: Führungsbahn
- 30: Zahnstange
- 31: Leitfläche
- 32: Leitfläche
- 33: Leitfläche
- 34: Leitfläche
- 35: Eckbereich
- 36: Eckbereich
- 37: Steuerkulisse
- 38: Mitnehmernocken
- 39: Steuerkulisse
- 40: Mitnehmernocken
- 41: Zähne
- 42: Ausnehmungen
- 43: Leiteinheiten
- D1: Schwenkachse
- D2, D3: Drehachse
- M: Mittelebene
- S: Sortierebene
- T: Transportrichtung
- V: Verstellrichtung

## Patentansprüche

1. Vorrichtung (1) zum Sortieren von Gebinden mit einem Sortiermodul (2), das zwischen einer das Gebinde zuführenden Zuführbahn (3) und einer Mehrzahl von Abfuhrbahnen (4,5,6,7,8) angeordnet und mittels einer Antriebseinheit (10) antreibbar ist,
- wobei das Sortiermodul (2) ein Stellelement (11,12) mit wenigstens einer Leitfläche (16,17,18) aufweist zur Führung des Gebindes in Richtung einer vorgegebenen Abfuhrbahn (4,8),
- wobei das Stellelement (11,12) senkrecht zu einer die Zuführbahn (3) und die Abfuhrbahnen (4-8) aufnehmenden Sortierebene um eine Schwenkachse (D1) drehbar angeordnet ist und
- wobei eine zwischen der Antriebseinheit (10) und dem Stellelement (11,12) angeordnete Übertragungseinheit (13) zur Übertragung einer Antriebsbewegung der Antriebseinheit (10) auf das Stellelement (11,12) derart auf das Stellelement (11,12) einwirkt, dass die Schwenkachse (D1) des Stellelements (11,12) unter Verdrehung derselben um die Schwenkachse (D1) entlang einer vorgegebenen Führungsbahn (29) geführt ist zur Verbringung des Stellelements (11,12) von einer ersten Sortierstellung, in der die Zuführbahn (3) mit einer ersten Abfuhrbahn (4) verbunden ist, in eine zweite Sortierstellung, in der die Zuführbahn (3) mit einer zweiten Abfuhrbahn (5) verbunden ist,
**dadurch gekennzeichnet, dass** dem entlang der Führungsbahn (29) geführten Stellelement (11, 12) ein ortsfest angeordneter, um eine Drehachse (D2, D3) schwenkbarer Stellflügel (14, 15) mit wenigstens einer zusätzlichen Leitfläche (31, 32, 33, 34) zugeordnet ist.

2. Vorrichtung nach Anspruch 1, **dadurch gekennzeichnet, dass** sich die Führungsbahn (29) in eine Verstellrichtung (V) des Sortiermoduls (2) linear erstreckt.

3. Vorrichtung nach Anspruch 2, **dadurch gekennzeichnet, dass** die Übertragungseinheit (13) ein linear in der Verstellrichtung (V) erstrecktes, ortsfestes Führungsmittel (Zahnstange 30) und ein koaxial zu der Schwenkachse (D1) des Stellelements (11, 12) angeordnetes, mit dem Stellelement (11, 12) in Wirkverbindung stehendes rotierendes Führungsmittel aufweist und dass das ortsfeste Führungsmittel (Zahnstange 30) und das rotierende Führungsmittel derart zusammenwirken, dass das Stellelement (11, 12) bei Rotation desselben um die Schwenkachse (D1) entlang der Führungsbahn (29) linear bewegbar geführt ist.

4. Vorrichtung nach einem der Ansprüche 1 bis 3, **dadurch gekennzeichnet, dass** die Antriebseinheit (10) und/oder die Stelleinheit (11, 12) und/oder das rotierende Führungsmittel an einem entlang der Führungsbahn (29) linear bewegbaren Schlitten (26) befestigt sind.

5. Vorrichtung nach einem der Ansprüche 1 bis 4, **dadurch gekennzeichnet, dass** das Sortiermodul (2) eine in der Verstellrichtung (V) verschiebbar angeordnete Steuerkontur (37, 39) aufweist zum Betätigen des Stellflügels (14, 15) und zum Verschwenken desselben von einer ersten Schwenkstellung in wenigstens eine zweite Schwenkstellung.

6. Vorrichtung nach einem der Ansprüche 1 bis 5, **dadurch gekennzeichnet, dass** zwei Stellelemente (11, 12) angeordnet sind, die um eine gemeinsame Schwenkachse (D1), jedoch in entgegengesetzte Drehrichtungen drehbar gelagert sind.

7. Vorrichtung nach Anspruch 6, **dadurch gekennzeichnet, dass** ein erstes Stellelement (11) in der zu der Schwenkachse (D1) senkrecht orientierten Sortierebene (S) eine im Wesentlichen dreieckförmige Kontur aufweist, wobei die Dreieckseiten jeweils eine Leitfläche (16, 17, 18) bilden, von der ein erste Leitfläche (16) und eine zu der ersten Leitfläche (16) rechtwinklig orientierte zweite Leitfläche (17) im Wesentlichen eben ausgebildet sind und von der eine die erste Leitfläche (16) und die zweite Leitfläche (17) verbindende dritte Leitfläche (18) im Wesentlichen konkav gekrümmt ausgebildet ist, und dass das zweite Stellelement (12) im Wesentlichen langgestreckt ausgebildet ist mit zwei gegenüberliegenden Längsseiten als zwei Leitflächen (21, 22).

8. Vorrichtung nach einem der Ansprüche 1 bis 7, **dadurch gekennzeichnet, dass** das Sortiermodul (2) zwei Stellflügel (14, 15) aufweist und dass das wenigstens eine Stellelement (11, 12) in Verstellrichtung (V) zwischen den beiden Stellflügeln (14, 15) angeordnet ist.

9. Vorrichtung nach Anspruch 8, **dadurch gekennzeichnet, dass** die Stellflügel (14, 15) in der Sortierebene (S) im Wesentlichen dreieckförmig ausgebildet sind, wobei eine ersten Dreieckseite im Wesentlichen eben ausgebildet ist und als eine erste Leitfläche (31, 33) des Stellflügels (14, 15) dient und wobei eine zweite Dreieckseite, die mit der ersten Leitfläche (31, 33) einen spitzen Eckbereich (35, 36) bildet, im Wesentlichen konkav gekrümmt ausgebildet ist und als eine zweite Leitfläche (32, 34) dient.

10. Vorrichtung nach Anspruch 9, **dadurch gekennzeichnet, dass** ein dem dreieckförmigen ersten Stellelement (11) zugeordnetes erstes lineares Führungsmittel (Zahnstange 30) derart auf ein drehfest mit dem dreieckförmigen ersten Stellelement (11) verbundenen ersten rotierenden Führungsmittel und ein dem langgestreckten zweiten Stellelement (12) zugeordnetes zweites lineares Führungsm ittel derart auf ein drehfest mit dem langgestreckten zweiten Stellelement (12) zugeordneten zweiten rotierenden Führungsmittel einwirken und dass eine erste Steuerkontur (37) des Sortiermoduls (2) derart mit einem ersten Mitnehmernocken (38) des ersten Stellflügels (14) und eine zweite Steuerkontur (39) des Sortiermoduls (2) derart mit einem Mitnehmernocken (40) des zweiten Stellflügels (15) zusammenwirken und dass die Leitflächen (16, 17, 18) des ersten Stellelements (11) und die Leitflächen (21, 22) des zweiten Stellelements (12) und die Leitflächen (31, 32) des ersten Stellflügels (14) und die Leitflächen (33, 34) des zweiten Stellflügels(15) derart höhenversetzt zueinander angeordnete, sich senkrecht zu der Schwenkachse (D2, D3) erstreckende Ausnehmungen (42) und Zähne (41) aufweisen, dass das Gebinde in Abhängigkeit von der Drehstellung des Sortiermoduls (2)
- in einer ersten Sortierstellung entlang der über die Zuführbahn (3) geschwenkten dritten Leitfläche (18) des ersten Stellelements (11) und der in einer Transportrichtung (T) des Gebindes vor der dritten Leitfläche (18) des ersten Stellelements (11) angeordneten ersten Leitfläche (31) des ersten Stellflügels (14) einer ersten Abfuhrbahn (4) zuführbar ist,
- in einer zweiten Sortierstellung entlang der über die Zuführbahn (3) geschwenkten dritten Leitfläche (18) des ersten Stellelements (11) und der in Transportrichtung (T) vor der dritten Leitfläche (18) des ersten Stellelements (11) angeordneten ersten Leitfläche (33) des zweiten Stellflügels (15) einer zweiten Abfuhrbahn (5) zuführbar ist,
- in einer dritten Sortierstellung entlang der über die Zuführbahn (3) geschwenkten zweiten Leitfläche (17) des ersten Stellelements (11) und zwischen der zweiten Leitfläche (17) des ersten Stellelements (11) und der zweiten Leitfläche (32) des ersten Stellflügels (14) hindurch einer dritten Abfuhrbahn (6) zuführbar ist,
- in einer vierten Sortierstellung entlang der über die Zuführbahn (3) geschwenkten ersten Leitfläche (21) des zweiten Stellelements (12) und der in Transportrichtung (T) vor der ersten Leitfläche (21) des zweiten Stellelements (12) angeordneten ersten Leitfläche (16) des ersten Stellelements (11) und zwischen der ersten Leitfläche (21) des zweiten Stellelements (12) und der ersten Leitfläche (16) des ersten Stellelements (11) einerseits und der zweiten Leitfläche (32) des ersten Stellflügels (14) andererseits hindurch der dritten Abfuhrbahn (6) zuführbar ist,
- in einer fünften Sortierstellung entlang der über die Zuführbahn (3) geschwenkten ersten Leitfläche (16) des ersten Stellelements (11) und zwischen der ersten Leitfläche (16) des ersten Stellelements (11) und der zweiten Leitfläche (34) des zweiten Stellflügels (15) hindurch einer vierten Abfuhrbahn (7) zuführbar ist,
- in einer sechsten Sortierstellung entlang der über die Zuführbahn (3) geschwenkten zweiten Leitfläche (22) des zweiten Stellelements (12) und der in Transportrichtung (T) vor der zweiten Leitfläche (22) des zweiten Stellelements (12) angeordneten zweiten Leitfläche (17) des ersten Stellelements (11) und zwischen der zweiten Leitfläche (22) des zweiten Stellelements (12) und der zweiten Leitfläche (17) des ersten Stellelements (11) einerseits und der zweiten Leitfläche (34) des zweiten Stellflügels (15) andererseits hindurch der vierten Abfuhrbahn (7) zuführbar ist,
- in einer siebten Sortierstellung einer in Verlängerung der Zuführbahn (3) angeordneten fünften Abfuhrbahn (8) zuführbar ist, wobei das erste Stellelement (11) und das zweite Stellelement (12) auf einer dem zweiten Stellflügel (15) zugeordneten Seite benachbart zu der Zuführbahn (3) und der fünften Abfuhrbahn (8) angeordnet sind, und
- in einer achten Sortierstellung der in Verlängerung der Zuführbahn (3) angeordneten fünften Abfuhrbahn (8) zuführbar ist, wobei das erste Stellelement (11) und das zweite Stellelement (12) auf einer dem ersten Stellflügel (14) zugeordneten Seite benachbart zu der Zuführbahn (3) und der fünften Abfuhrbahn (8) angeordnet sind.

## Claims

1. Apparatus (1) for sorting containers, having a sorting module (2) which is arranged between a feed path (3), which feeds the container, and a plurality of discharge paths (4, 5, 6, 7, 8) and can be driven by means of a drive unit (10),
- wherein the sorting module (2) has an adjusting element (11, 12) with at least one directing surface (16, 17, 18), for guiding the container in the direction of a predetermined discharge path (4-8),
- wherein the adjusting element (11, 12) is arranged such that it can be rotated about a pivot axis (D1) perpendicularly to a sorting plane which accommodates the guide path (3) and the discharge paths (4-8), and
- wherein a transmission unit (13), which is arranged between the drive unit (10) and the adjusting element (11, 12) and is intended for transmitting a drive movement of the drive unit (10) to the adjusting element (11, 12), acts on the adjusting element (11, 12) such that the pivot axis (D1) of the adjusting element (11, 12), with rotation of the latter about the pivot axis (D1), is guided along a predetermined guide path (24), in order to shift the adjusting element (11, 12) from a first sorting position, in which the feed path (3) is connected to a first discharge path (4), into a second sorting position, in which the feed path (3) is connected to a second discharge path (5),
**characterized in that** the adjusting element (11, 12), which is guided along the guide path (29), is assigned a fixed-location adjusting wing (14, 15), which can be pivoted about an axis of rotation (D2, D3) and has at least one additional directing surface (31, 32, 33, 34).

2. Apparatus according to Claim 1, **characterized in that** the guide path (29) extends linearly in an adjusting direction (V) of the sorting module (2).

3. Apparatus according to Claim 2, **characterized in that** the transmission unit (13) has a fixed-location guide means (rack 30), which extends linearly in the adjusting direction (V), and a rotating guide means, which is arranged coaxially in relation to the pivot axis (D1) of the adjusting element (11, 12) and is in operative connection with the adjusting element (11, 12), and **in that** the fixed-location guide means (rack 30) and the rotating guide means interact such that the adjusting element (11, 12), upon rotation of the same about the pivot axis (D1), is guided in a linearly movable manner along the guide path (29).

4. Apparatus according to one of Claims 1 to 3, **characterized in that** the drive unit (10) and/or the adjusting unit (11, 12) and/or the rotating guide means are/is fastened on a carriage (26), which can be moved linearly along the guide path (29).

5. Apparatus according to one of Claims 1 to 4, **characterized in that** the sorting module (2) has a control contour (37, 39), which is arranged such that it can be displaced in the adjusting direction (V) and is intended for actuating the adjusting wing (14, 15) and for pivoting the same from a first pivoting position into at least a second pivoting position.

6. Apparatus according to one of Claims 1 to 5, **characterized by** the provision of two adjusting elements (11, 12) which are mounted such that they can be rotated about a common pivot axis (D1), albeit in opposite directions of rotation.

7. Apparatus according to Claim 6, **characterized in that** a first adjusting element (11), in the sorting plane (S) oriented perpendicularly to the pivot axis (D1), has an essentially triangular contour, wherein the sides of the triangle each form a directing surface (16, 17, 18), of which a first directing surface (16) and a second directing surface (17), which is oriented at right angles to the first directing surface (16), are of essentially planar design and of which a third directing surface (18), which connects the first directing surface (16) and the second directing surface (17), is of essentially concavely curved design, and **in that** the second adjusting element (12) is of essentially elongate design, with two opposite longitudinal sides as two directing surfaces (21, 22).

8. Apparatus according to one of Claims 1 to 7, **characterized in that** the sorting module (2) has two adjusting wings (14, 15), and **in that** the at least one adjusting element (11, 12) is arranged between the two adjusting wings (14, 15), as seen in the adjusting direction (V).

9. Apparatus according to Claim 8, **characterized in that** the adjusting wings (14, 15), in the sorting plane (S), are of essentially triangular design, wherein a first side of the triangle is of essentially planar design and serves as a first directing surface (31, 33) of the adjusting wing (14, 15), and wherein a second side of the triangle, which forms an acute-angled corner region (35, 36) with the first directing surface (31, 33), is of essentially concavely curved design and serves as a second directing surface (32, 34).

10. Apparatus according to Claim 9, **characterized in that** a first linear guide means (rack 30), which is assigned to the triangular first adjusting element (11), acts on a first rotating guide means, which is connected in a rotationally fixed manner to the triangular first adjusting element (11) in such a manner, and a second linear guide means, which is assigned to the elongate second adjusting element (12), acts on a second rotating guide means, which is rotationally fixed to the elongate second adjusting element (12), in such a manner, and **in that** a first control contour (37) of the sorting module (2) interacts with a first driver cam (38) of the first adjusting wing (14) in such a manner, and a second control contour (39) of the sorting module (2) interacts with a driver cam (40) of the second adjusting wing (15) in such a manner, and **in that** the directing surfaces (16, 17, 18) of the first adjusting element (11) and the directing surfaces (21, 22) of the second adjusting element (12), and the directing surfaces (31, 32) of the first adjusting wing (14) and the directing surfaces (33, 34) of the second adjusting wing (15), have teeth (41) and recesses (42) extending perpendicularly to the pivot axis (D2, D3) and are offset vertically in relation to one another in such a manner that the container, in dependence on the rotary position of the sorting module (2),
- in a first sorting position, can be fed to a first discharge path (4) along the third directing surface (18) of the first adjusting element (11), this third directing surface being pivoted over the feed path (3), and the first directing surface (31) of the first adjusting wing (14), this first directing surface being arranged upstream of the third directing surface (18) of the first adjusting element (11), as seen in a transporting direction (T) of the container,
- in a second sorting position, can be fed to a second discharge path (5) along the third directing surface (18) of the first adjusting element (11), this third directing surface being pivoted over the feed path (3), and the first directing surface (33) of the second adjusting wing (15), this first directing surface being arranged upstream of the third directing surface (18) of the first adjusting element (11), as seen in the transporting direction (T),
- in a third sorting position, can be fed to a third discharge path (6) along the second directing surface (17) of the first adjusting element (11), this second directing surface being pivoted over the feed path (3), and between the second directing surface (17) of the first adjusting element (11) and the second directing surface (32) of the first adjusting wing (14),
- in a fourth sorting position, can be fed to the third discharge path (6) along the first directing surface (21) of the second adjusting element (12), this first directing surface being pivoted over the feed path (3), and the first directing surface (16) of the first adjusting element (11), this first directing surface being arranged upstream of the first directing surface (21) of the second adjusting element (12), as seen in the transporting direction (T), and between the first directing surface (21) of the second adjusting element (12) and the first directing surface (16) of the first adjusting element (11), on the one hand, and the second directing surface (32) of the first adjusting wing (14), on the other hand,
- in a fifth sorting position, can be fed to a fourth discharge path (7) along the first directing surface (16) of the first adjusting element (11), this first directing surface being pivoted over the feed path (3), and between the first directing surface (16) of the first adjusting element (11) and the second directing surface (34) of the second adjusting wing (15),
- in a sixth sorting position, can be fed to the fourth discharge path (7) along the second directing surface (22) of the second adjusting element (12), this second directing surface being pivoted over the feed path (3), and the second directing surface (17) of the first adjusting element (11), this second directing surface being arranged upstream of the second directing surface (22) of the second adjusting element (12), as seen in the transporting direction (T), and between the second directing surface (22) of the second adjusting element (12) and the second directing surface (17) of the first adjusting element (11), on the one hand, and the second directing surface (34) of the second adjusting wing (15), on the other hand,
- in a seventh sorting position, can be fed to a fifth discharge path (8), which is arranged in extension of the feed path (3), wherein the first adjusting element (11) and the second adjusting element (12), on a side assigned to the second adjusting wing (15), are arranged adjacent to the feed path (3) and the fifth discharge path (8), and
- in an eighth sorting position, can be fed to the fifth discharge path (8), which is arranged in extension of the feed path (3), wherein the first adjusting element (11) and the second adjusting element (12), on a side assigned to the first adjusting wing (14), are arranged adjacent to the feed path (3) and the fifth discharge path (8).

## Revendications

1. Dispositif (1) pour trier des contenants, comprenant un module de tri (2) qui peut être disposé entre une bande d'alimentation (3) alimentant le contenant et une pluralité de bandes d'évacuation (4, 5, 6, 7, 8) et qui peut être entraîné au moyen d'une unité d'entraînement (10),
- le module de tri (2) présentant un élément de réglage (11, 12) avec au moins une surface de guidage (16, 17, 18) pour guider le contenant dans la direction d'une bande d'évacuation prédéfinie (4-8),
- l'élément de réglage (11, 12) étant disposé perpendiculairement à un plan de tri recevant la bande d'alimentation (3) et les bandes d'évacuation (4-8), de manière à pouvoir tourner autour d'un axe de pivotement (D1) et
- une unité de transfert (13) disposée entre l'unité d'entraînement (10) et l'élément de réglage (11, 12), pour le transfert d'un mouvement d'entraînement de l'unité d'entraînement (10) à l'élément de réglage (11, 12), agissant sur l'élément de réglage (11, 12) de telle sorte que l'axe de pivotement (D1) de l'élément de réglage (11, 12) soit guidé par rotation de celui-ci autour de l'axe de pivotement (D1) le long d'une bande de guidage prédéfinie (24) pour amener l'élément de réglage (11, 12) d'une première position de tri, dans laquelle la bande d'alimentation (3) est reliée à une première bande d'évacuation (4), dans une deuxième position de tri, dans laquelle la bande d'alimentation (3) est reliée à une deuxième bande d'évacuation (5),
**caractérisé en ce qu'**un battant de réglage (14, 15) disposé fixement, pouvant pivoter autour d'un axe de rotation (D2, D3), avec au moins une surface de guidage supplémentaire (31, 32, 33, 34) est associé à l'élément de réglage (11, 12) guidé le long de la bande de guidage (29).

2. Dispositif selon la revendication 1, **caractérisé en ce que** la bande de guidage (29) s'étend linéairement dans une direction de réglage (V) du module de tri (2).

3. Dispositif selon la revendication 2, **caractérisé en ce que** l'unité de transfert (13) présente un moyen de guidage fixe (crémaillère 30) s'étendant linéairement dans la direction de réglage (V) et un moyen de guidage rotatif disposé coaxialement par rapport à l'axe de pivotement (D1) de l'élément de réglage (11, 12), en liaison fonctionnelle avec l'élément de réglage (11, 12), et **en ce que** le moyen de guidage fixe (crémaillère 30) et le moyen de guidage rotatif coopèrent l'un avec l'autre, de telle sorte que l'élément de réglage (11, 12), lors de sa rotation autour de l'axe de pivotement (D1) soit guidé de manière déplaçable linéairement le long de la bande de guidage (29).

4. Dispositif selon l'une quelconque des revendications 1 à 3, **caractérisé en ce que** l'unité d'entraînement (10) et/ou l'unité de réglage (11, 12) et/ou le moyen de guidage rotatif sont fixés sur un chariot (26) déplaçable linéairement le long de la bande de guidage (29).

5. Dispositif selon l'une quelconque des revendications 1 à 4, **caractérisé en ce que** le module de tri (2) présente un contour de commande (37, 39) disposé de manière déplaçable dans la direction de réglage (V) pour actionner le battant de réglage (14, 15) et pour le faire pivoter depuis une première position de pivotement dans au moins une deuxième position de pivotement.

6. Dispositif selon l'une quelconque des revendications 1 à 5, **caractérisé en ce que** deux éléments de réglage (11, 12) sont prévus, lesquels sont montés à rotation autour d'un axe de pivotement commun (D1), mais dans des sens de rotation opposés.

7. Dispositif selon la revendication 6, **caractérisé en ce qu'**un premier élément de réglage (11) présente, dans le plan de tri (S) orienté perpendiculairement à l'axe de pivotement (D1) un contour sensiblement triangulaire, les côtés du triangle formant à chaque fois une surface de guidage (16, 17, 18), dont une première surface de guidage (16) et une deuxième surface de guidage (17) orientée perpendiculairement à la première surface de guidage (16) sont réalisées de manière sensiblement planes, et dont une troisième surface de guidage (18) reliant la première surface de guidage (16) et la deuxième surface de guidage (17) est réalisée avec une courbure sensiblement concave, et **en ce que** le deuxième élément de réglage (12) est réalisé de manière sensiblement allongée avec deux côtés longitudinaux opposés en tant que deux surfaces de guidage (21, 22).

8. Dispositif selon l'une quelconque des revendications 1 à 7, **caractérisé en ce que** le module de tri (2) présente deux battants de réglage (14, 15) et **en ce que** l'au moins un élément de réglage (11, 12) est disposé dans la direction de réglage (V) entre les deux battants de réglage (14, 15).

9. Dispositif selon la revendication 8, **caractérisé en ce que** les battants de réglage (14, 15) dans le plan de tri (S) sont réalisés sensiblement sous forme triangulaire, un premier côté du triangle étant réalisé sous forme sensiblement plane, et servant de première surface de guidage (31, 33) du battant de réglage (14, 15), et un deuxième côté du triangle, qui forme avec la première surface de guidage (31, 33) une région d'angle aigu (35, 36), étant réalisé sensiblement sous forme courbe concave et servant de deuxième surface de guidage (32, 34).

10. Dispositif selon la revendication 9, **caractérisé en ce qu'**un premier moyen de guidage linéaire (crémaillère 30) associé au premier élément de réglage triangulaire (11) agit de telle sorte sur un premier moyen de guidage rotatif connecté de manière solidaire en rotation avec le premier élément de réglage (11) triangulaire, et un deuxième moyen de guidage linéaire associé au deuxième élément de réglage allongé (12) agit de telle sorte sur un deuxième moyen de guidage rotatif associé de manière solidaire en rotation avec le deuxième élément de réglage allongé (12), et **en ce qu'**un premier contour de commande (37) du module de tri (2) coopère de telle sorte avec une première came d'entraînement (38) du premier battant de réglage (14) et un deuxième contour de commande (39) du module de tri (2) coopère de telle sorte avec une came d'entraînement (40) du deuxième battant de réglage (15), et que les surfaces de guidage (16, 17, 18) du premier élément de réglage (11) et les surfaces de guidage (21, 22) du deuxième élément de réglage (12) et les surfaces de guidage (31, 32) du premier battant de réglage (14) et les surfaces de guidage (33, 34) du deuxième battant de réglage (15) présentent des évidements (42) et des dents (41) s'étendant perpendiculairement à l'axe de pivotement (D2, D3) et disposés de manière décalée en hauteur les uns par rapport aux autres de telle sorte, que le contenant, en fonction de la position de rotation du module de tri (2),
- dans une première position de tri le long de la troisième surface de guidage (18) du premier élément de réglage (11) pivotée sur la bande d'alimentation (3) et le long de la première surface de guidage (31) du premier battant de réglage (14) disposée dans une direction de transport (T) du contenant avant la troisième surface de guidage (18) du premier élément de réglage (11), puisse être amené à une première bande d'évacuation (4),
- dans une deuxième position de tri le long de la troisième surface de guidage (18) du premier élément de réglage (11) pivotée sur la bande d'alimentation (3) et la première surface de guidage (33) du deuxième battant de réglage (15) disposée dans la direction de transport (T) avant la troisième surface de guidage (18) du premier élément de réglage (11), puisse être amené à une deuxième bande d'évacuation (5),
- dans une troisième position de tri le long de la deuxième surface de guidage (17) du premier élément de réglage (11) pivotée sur la bande d'alimentation (3) et entre la deuxième surface de guidage (17) du premier élément de réglage (11) et la deuxième surface de guidage (32) du premier battant de réglage (14), puisse être amené à une troisième bande d'évacuation (6),
- dans une quatrième position de tri le long de la première surface de guidage (21) du deuxième élément de réglage (12) pivotée sur la bande d'alimentation (3) et le long de la première surface de guidage (16) du premier élément de réglage (11) disposée dans la direction de transport (T) avant la première surface de guidage (21) du deuxième élément de réglage (12) et entre la première surface de guidage (21) du deuxième élément de réglage (12) et la première surface de guidage (16) du premier élément de réglage (11) d'une part et la deuxième surface de guidage (32) du premier battant de réglage (14) d'autre part, puisse être amené à la troisième bande d'évacuation (6),
- dans une cinquième position de tri, le long de la première surface de guidage (16) du premier élément de réglage (11) pivotée sur la bande d'alimentation (3) et entre la première surface de guidage (16) du premier élément de réglage (11) et la deuxième surface de guidage (34) du deuxième battant de réglage (15), puisse être amené à une quatrième bande d'évacuation (7),
- dans une sixième position de tri, le long de la deuxième surface de guidage (22) du deuxième élément de réglage (12) pivotée sur la bande d'alimentation (3) et le long de la deuxième surface de guidage (17) du premier élément de réglage (11) disposée dans la direction de transport (T) avant la deuxième surface de guidage (22) du deuxième élément de réglage (12) et entre la deuxième surface de guidage (22) du deuxième élément de réglage (12) et la deuxième surface de guidage (17) du premier élément de réglage (11) d'une part et la deuxième surface de guidage (34) du deuxième battant de réglage (15) d'autre part, puisse être amené à la quatrième bande d'évacuation (7),
- dans une septième position de tri, puisse être amenée à une cinquième bande d'évacuation (8) disposée dans le prolongement de la bande d'alimentation (3), le premier élément de réglage (11) et le deuxième élément de réglage (12) étant disposés sur un côté associé au deuxième battant de réglage (15) à côté de la bande d'alimentation (3) et de la cinquième bande d'évacuation (8), et
- dans une huitième position de tri, puisse être amené à la cinquième bande d'évacuation (8) disposée dans le prolongement de la bande d'alimentation (3), le premier élément de réglage (11) et le deuxième élément de réglage (12) étant disposés sur un côté associé au premier battant de réglage (14) à côté de la bande d'alimentation (3) et de la cinquième bande d'évacuation (8).
